# EUROPEAN PATENT APPLICATION

(11) **EP 4 290 323 A1**
(43) Date of publication of application: **13.12.2023**
(21) Application number: 22763382.3
(22) Date of filing: 03.03.2022
(51) Int. Cl.: G05B 19/418, F27D 19/00, G06Q 50/04

(54) **ENERGY DEMAND AND SUPPLY OPERATION GUIDANCE DEVICE AND SYSTEM OF SAME, OPTIMIZATION CALCULATION SERVER DEVICE AND PROGRAM FOR SAME, GUIDANCE TERMINAL DEVICE AND PROGRAM FOR SAME, ENERGY DEMAND AND SUPPLY OPERATION METHOD IN PLACE OF BUSINESS, AND ENERGY DEMAND AND SUPPLY OPERATION PROGRAM**

(30) Priority: 05.03.2021 JP 2021034897
(71) Applicant: JFE Steel Corporation, Tokyo 100-0011 (JP)
(72) Inventor: UNO Masahiro, Tokyo 100-0011 (JP); SUZUKI Katsuya, Tokyo 100-0011 (JP); TASHIMA Yuki, Tokyo 100-0011 (JP)
(74) Representative: Hoffmann Eitle
(86) International application number: PCT/JP2022/009103
(87) International publication number: WO 2022/186330

(57) **Abstract**

Provided is a technology that improves the accuracy of an operation plan used in a calculation for reducing the cost of energy demand and supply operation in a place of business having a factory that performs intermittent operation. The present invention includes: an optimization calculation unit that, using a plant model that describes demand-supply balances of gas, steam, and electricity in a place of business having a factory that performs intermittent operation, and a model of a demand and supply operation cost of the place of business, predicts optimum demand and supply amounts of gas, steam, and electricity in an iron mill and times of reaching plant operation limits, based on collected latest values of variables included in the plant model and on model parameters including set values of each of the models; a display item selection unit that selects a work condition to be changed in the future determined based on calculated future optimum demand and supply amounts or present actual demand and supply amounts, or selects a predicted time of reaching a plant operation limit; and an alarm output unit that outputs the selected display item. The optimization calculation unit corrects an operation plan of the factory in accordance with a record.

## Description

### Technical Field

The present invention relates to an energy demand and supply operation guidance device that assists the work of demand and supply operation of gas, steam, and electricity in a place of business having a factory that performs an intermittent operation, a system of the same, an optimization calculation server device used for this device, a program for the optimization calculation server device, a guidance terminal device, a program for the guidance terminal device, an energy demand and supply operation method in a place of business, and an energy demand and supply operation program.

### Background Art

Generally, iron mills are places of business having a plurality of factories, and reuse a blast furnace gas (B gas) generated as a by-product from a blast furnace, a coke gas (C gas) generated from a coke furnace, and a converter gas (LD gas) generated from an LD converter directly or as a mixed gas (M gas) in factories and in-house power generation facilities. Here, when gas is managed in such a manner that a surplus of gas is generated beyond the level of a gas holder that stores the gas, the surplus gas has to be released into the atmosphere, which incurs a loss. On the other hand, in a situation where gas falls short as the amount of gas demanded exceeds the amount of gas supplied, the operation of factories is affected and again a loss is incurred. Therefore, iron mills need to appropriately manage gas according to demand and supply amounts of gas.

Further, iron mills also need to appropriately manage steam as well as gas, and should avoid particularly a shortage of steam. That is, other than the amount of steam supplied from an exhaust heat boiler of an LD gas, the amount of steam supplied that is obtained by bleeding air (taking steam out from an intermediate point of a turbine) from a steam turbine for in-house power generation, such as a boiler steam-turbine generator (BTG) or a coke dry quenching (CDQ) system, need to be managed so as not to fall short of the amount of steam demanded. As for electricity, restrictions apply such as that an upper limit value for the amount of electricity received from the outside should not be exceeded.

Thus, iron mills are required to manage gas, steam, and electricity at a low cost. In view of these circumstances, technologies that optimize the operation of iron mills or plants that supply various types of energy in terms of costs have been proposed. Specifically, Patent Literatures 1 and 2 describe techniques that formulize a plant and its operation cost within the framework of a mathematical programming method and seek an optimum operation plan of the plant using a variety of optimization techniques.

### Citation List

### Patent Literature

Patent Literature 1: International Publication No. WO 2015/093262
Patent Literature 2: International Publication No. WO 2015/174359

### Summary of Invention

### Technical Problem

However, the aforementioned conventional technologies have the following problems yet to be solved.

The conventional technologies described in Patent Literatures 1 and 2 output calculation results for minimizing utility costs. However, only the amount of each utility for minimizing the utility costs are output, and there is a wide gap between a plan and a record in a factory etc. that performs intermittent operation. Thus, the challenge is to improve the accuracy of an operation plan used in a calculation for minimizing utility costs.

Having been contrived in view of these circumstances, the present invention aims to provide a technology that improves the accuracy of an operation plan used in a calculation for reducing utility costs involved in the demand and supply operation of various types of energy in a place of business having a factory that performs intermittent operation.

### Solution to Problem

An energy demand and supply operation guidance device according to the present invention developed to solve the above problem and achieve the above object is an energy demand and supply operation guidance device that assists the work of demand and supply operation of gas, steam, and electricity in a place of business having a factory that performs intermittent operation. The device includes: an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model; a display item selection unit that selects at least one of work conditions to be changed in the future determined based on future optimum demand and supply amounts calculated by the optimization calculation unit and on present actual demand and supply amounts, and selects at least one selected from the times of reaching plant operation limits predicted by the optimization calculation unit; and an alarm output unit that functions to output display items selected by the display item selection unit. A future operation plan of the factory used in the optimization calculation unit is corrected based on one or two selected from a last operation record and last operation information in the factory. The optimum demand and supply amounts here are demand and supply amounts that reduce a demand and supply operation cost of the place of business.

An energy demand and supply operation guidance system according to the present invention is an energy demand and supply operation guidance system that includes an optimization calculation server device and a guidance terminal device and assists the work of demand and supply operation of gas, steam, and electricity in a place of business having a factory that performs intermittent operation. The optimization calculation server device has: an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model; and a server data output unit that outputs, as server data, actual demand and supply amounts of gas, steam, and electricity in the place of business, and the optimum demand and supply amounts and the times of reaching operation limits that have been predicted by the optimization calculation unit. The guidance terminal device has: a server data acquisition unit that acquires the server data from the server data output unit; a display item selection unit that selects at least one of work conditions to be changed in the future determined based on future optimum demand and supply amounts and present actual demand and supply amounts that have been acquired, and selects at least one selected from the times of reaching plant operation limits predicted by the optimization calculation unit; and an alarm output unit that functions to output display items selected by the display item selection unit. A future operation plan of the factory used in the optimization calculation unit is corrected based on one or two selected from a last operation record and last operation information in the factory. The optimum demand and supply amounts here are demand and supply amounts that reduce a demand and supply operation cost of the place of business.

An optimization calculation server device according to the present invention is an optimization calculation server device that is used to assist the work of demand and supply operation of gas, steam, and electricity in a place of business having a factory that performs intermittent operation. The device includes: an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model; and a server data output unit that outputs actual demand and supply amounts of gas, steam, and electricity in the place of business, and the optimum demand and supply amounts and the times of reaching operation limits that have been predicted by the optimization calculation unit, to assist the work of demand and supply operation. A future operation plan of the factory used in the optimization calculation unit is corrected based on one or two selected from a last operation record and last operation information in the factory. The optimum demand and supply amounts here are demand and supply amounts that reduce a demand and supply operation cost of the place of business.

A guidance terminal device according to the present invention is a guidance terminal device that assists the work of demand and supply operation of gas, steam, and electricity in a place of business having a factory that performs intermittent operation. The device includes: a server data acquisition unit that acquires, from a server, actual demand and supply amounts of gas, steam, and electricity in the place of business, and optimum demand and supply amounts of gas, steam, and electricity in the place of business and times of reaching plant operation limits that the server has predicted using a plant model that describes demand-supply balances of gas, steam, and electricity in the place of business including an amount of electricity supplied from an electricity company and an amount of gas supplied from a gas company, and a cost model that describes a demand and supply operation cost of the place of business, based on collected latest values of variables included in the plant model and on model parameters including set values of the plant model and the cost model; a display item selection unit that selects at least one of work conditions to be changed in the future determined based on future optimum demand and supply amounts and present actual demand and supply amounts that have been acquired, and selects at least one selected from the times of reaching plant operation limits predicted by the server; and an alarm output unit that functions to output display items selected by the display item selection unit. One or both of the work condition and the time of reaching an operation limit that have been selected by the display item selection unit are predicted by correcting a future operation plan of the factory based on one or two selected from a last operation record and last operation information in the factory. The optimum demand and supply amounts here are demand and supply amounts that reduce a demand and supply operation cost of the place of business.

The energy demand and supply operation guidance device, the energy demand and supply operation guidance system, the optimization calculation server device, and the guidance terminal device according to the present invention could be more preferable solutions when the operation plan to be corrected is an operation start time, and one, or a combination of two or more, selected from the following is used: A: correction using a time difference between a plan and a record of an operation start time in the last operation of the factory; B: correction using operation information on the factory that is acquirable a predetermined time before operation start of the factory; and C: correction using operation information on the factory that is acquirable immediately before operation start of the factory.

An energy demand and supply operation method in a place of business according to the present invention includes a step of, after correcting an operation plan of the factory using one of the above-described energy demand and supply operation guidance devices, performing the work of demand and supply operation of gas, steam, and electricity in the place of business according to information output from the energy demand and supply operation guidance device.

A program for an optimization calculation server device according to the present invention is a program used by the above-described optimization calculation server device, and is configured such that functions of the optimization calculation unit and the server data output unit are realized by a computer.

A program for a guidance terminal device according to the present invention is a program used by the above-described guidance terminal device, and is configured such that functions of the respective units of the guidance terminal device are realized by a computer.

An energy demand and supply operation program according to the present invention is configured such that the step of the above-described energy demand and supply operation method in a place of business is executed by a computer.

### Advantageous Effects of Invention

As has been described above, the energy demand and supply operation guidance device, the system of the same, the optimization calculation server device, the program for the optimization calculation server device, the guidance terminal device, the program for the guidance terminal device, the energy demand and supply operation method in a place of business, and the energy demand and supply operation program according to the present invention correct a future operation plan of a factory used in the optimization calculation unit based on one or two selected from the last operation record and the last operation information of the factory that performs intermittent operation. Thus, the accuracy of the operation plan can be improved to thereby achieve a reduction in utility costs involved in demand and supply operation of various types of energy.

### Brief Description of Drawings

FIG. 1 is a block diagram showing the configuration of an energy demand and supply operation guidance device according to one embodiment of the present invention.
FIGs. 2(a) to 2(c) are flowcharts showing methods of correcting an operation plan according to the embodiment, with FIG. (a) showing a case where a difference between a planned operation value and an actual operation value relating to the last operation is used, FIG. (b) showing a case where an actual value relating to work a predetermined time before the operation plan is used, and FIG. (c) showing a case where an actual value relating to work immediately before the operation plan is used.
FIGs. 3(a) to 3(d) are schematic views showing examples of correcting an operation plan of a factory that performs intermittent operation, with FIG. 3(a) showing a case where a difference between a planned operation value and an actual operation value relating to the last operation is used, FIG. 3(b) showing a case where an actual value relating to work a predetermined time before the operation plan is used, FIG. 3(c) showing a case where an actual value relating to work immediately before the operation plan is used, and FIG. 3(d) showing changes in gas holder level over time.
FIG. 4 is a sectional view showing an operation concept of a gas holder in the example of FIG. 3.
FIG. 5 is a flowchart showing a determination method for selecting display items according to the embodiment.
FIG. 6 (a) is a schematic view illustrating a guidance screen in the embodiment; FIG. (b) is a schematic view illustrating an alarm display dialog part; and FIG. 6(c) is a schematic view illustrating a screen displaying details of alarm contents.

### Description of Embodiments

Configurations of an energy demand and supply operation guidance device, which is one embodiment of the present invention, a system of the same, an optimization calculation server device, and a guidance terminal device, and an energy demand and supply operation method in a place of business will be described below with reference to the drawings.

### [Plant Model and Cost Model]

First, with an iron mill taken as an example, a plant model and a cost model will be described that the energy demand and supply operation guidance device, which is one embodiment of the present invention, uses when performing an optimization calculation for optimizing management of demand and supply amounts of gas, steam, and electricity in a place of business so as to reduce the demand and supply operation cost.

The plant model includes: input-output characteristics, shown in Table 1 below, of in-house power generation facilities (a BTG, a CDQ, a TRT, etc.) that generate electricity using gas and steam generated in the iron mill, and a gas holder that stores gas generated in the iron mill; and restriction conditions, shown in Table 2 below, that describe demand-supply balances of electricity and steam in the iron mill, and a gas demand-supply balance among an amount of gas (a B gas, a C gas, an LD gas, and an M gas) supplied in the iron mill, an amount of gas demanded in the iron mill, and an amount of gas supplied from a gas company. The plant model is formulized as a mixed-integer programming problem. Whether to implement turbine bypassing in a BTG or a CDQ can be determined according to the amounts of excess and deficiency of steam when the amount of air bled is maximized, and this determination can be formulized as a mixed-integer programming problem.

**[Table 1]**

| Power generation facility | (1) BTG power generation amount = coefficient×input heat amount (B gas, C gas, LD gas, M gas, heavy oil) - coefficient×amount of air bled |
|---|---|
| | (2) CDQ power generation amount (during normal operation) = coefficient×boiler steam - coefficient×amount of air bled |
| | (3) CDQ power generation amount (during turbine bypassing) = 0 |
| Gas holder | (1) Gas holder level = (intake amount - payout amount) + previous gas holder level |

**[Table 2]**

| | |
|---|---|
| B gas | (1) Generation amount (= blast furnace + B gas holder payout amount) = consumption amount (= factory + in-house generation + B gas holder intake amount) + release amount |
| | (2) Restrictions on upper limits of payout amount and intake amount of B gas holder / restrictions on upper and lower limits of B gas holder |
| C gas | (1) Generation amount (= coke furnace + C gas holder payout amount) = consumption amount (= factory + in-house generation + C gas holder intake amount) + release amount |
| | (2) Restrictions on upper limits of payout amount and intake amount of C gas holder / restrictions on upper and lower limits of C gas holder |
| LD gas | (1) Generation amount (= converter + LD gas holder payout amount) = consumption amount (= factory + in-house generation + LD gas holder intake amount) + release amount |
| | (2) Restrictions on upper limits of payout amount and intake amount of LD gas holder / restrictions on upper and lower limits of LD gas holder |
| M gas | (1) Restriction that requires heat amount to remain constant before and after mixing (pre-mixing heat amount = post-mixing heat amount) |
| | (2) Restriction on range of heat amount of M gas (restriction that requires B, C, and LD gases to be mixed so as to achieve a heat amount [MJ/Nm³] around a specified heat amount) |
| | (3) Restriction on upper limit of M gas generation amount (upper limit of volume generated per unit time) |
| Purchased gas | (1) Compensation for amount by which gas generation amount falls short of gas consumption amount |
| Steam | Generation amount (exhaust heat boiler, CDQ air bleeding, boiler steam during turbine bypassing, etc. + amount purchased from outside) = consumption (factory) + release amount |
| Electricity | In-house power generation amount (CDQ, BTG, TRT, etc.) + amount of electricity bought - amount of electricity sold = demand (factory) |
| Power generation facility | (1) BTG air bleeding amount upper limit / CDQ air bleeding amount upper limit |
| | (2) Restriction on implementation of BTG turbine bypassing: when steam falls short even with BTG air bleeding amount maximized |
| | (3) Restriction on implementation of CDQ turbine bypassing: when steam falls short even with CDQ air bleeding amount maximized |

The cost model is represented as a sum of an electricity cost, a steam cost, a gas cost, and an in-house power generation cost in the iron mill, and each cost is formulized as in Table 3.

**Table 3]**

| | |
|---|---|
| Electricity | Cost of buying electricity - merit of selling electricity |
| Steam | Amount purchased from outside + release loss |
| Gas | Amount purchased from outside + release loss |
| In-house generation | Cost of pure water for in-house generation boiler |

### [Configuration of Energy Demand and Supply Guidance Operation Device]

The energy demand and supply operation guidance device that is one embodiment of the present invention is a device that assists the work of demand and supply operation of by-product gasses (a B gas, a C gas, an LD gas, and an M gas) generated in the iron mill as well as steam and electricity. This device may include an optimization calculation server device and a guidance terminal device.

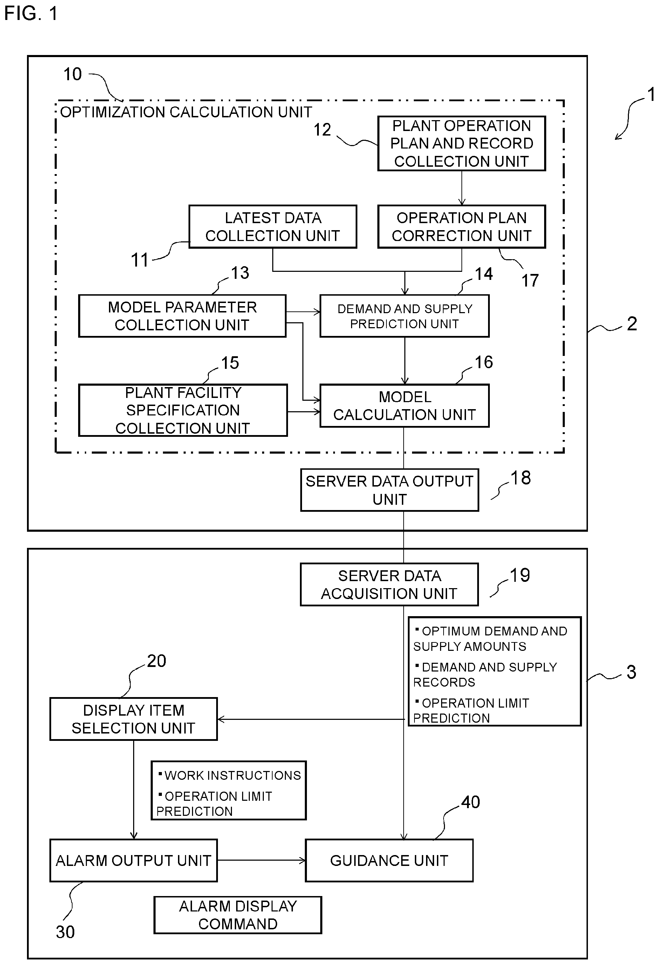

As shown in FIG. 1, an energy demand and supply operation guidance device 1 of this embodiment includes an optimization calculation unit 10 that calculates optimum demand and supply amounts of gas, steam, and electricity, a display item selection unit 20, an alarm output unit 30, and a guidance unit 40. As the energy demand and supply operation guidance system, an optimization calculation server device 2 having the optimization calculation unit 10 and a server data output unit 18 and a guidance terminal device 3 having a server data acquisition unit 19, the display item selection unit 20, the alarm output unit 30, and the guidance unit 40 may be configured to communicate with each other. The energy demand and supply operation guidance device 1, the optimization calculation server device 2, and the guidance terminal device 3 are each formed by an information processing device, such as a personal computer or a work station, and realized as an arithmetic processing device, such as a CPU, inside the information processing device executes a computer program. Further, an operation cost correction unit that corrects errors in demand and supply prediction may be included. Here, the optimum demand and supply amounts are demand and supply amounts that reduce a demand and supply operation cost of the place of business.

### <Optimization Calculation Server Device>

The optimization calculation unit 10 is composed of a latest data collection unit 11, a plant operation plan and record collection unit 12, a model parameter collection unit 13, a demand and supply prediction unit 14, a plant facility specification collection unit 15, a model calculation unit 16, and an operation plan correction unit 17.

The latest data collection unit 11 collects latest values of variables included in the plant model shown in Table 1 and Table 2 described above, and outputs the collected latest values as actual values to the demand and supply prediction unit 14.

The plant operation plan and record collection unit 12 collects information about an operation plan and an operation record of each factory in the iron mill including a factory that performs intermittent operation, and outputs the collected information to the demand and supply prediction unit 14 via the operation plan correction unit 17.

The operation plan correction unit 17 corrects a future operation plan based on one or two selected from the last operation record of a factory that performs intermittent operation and operation information relating to the start of operation of that factory.

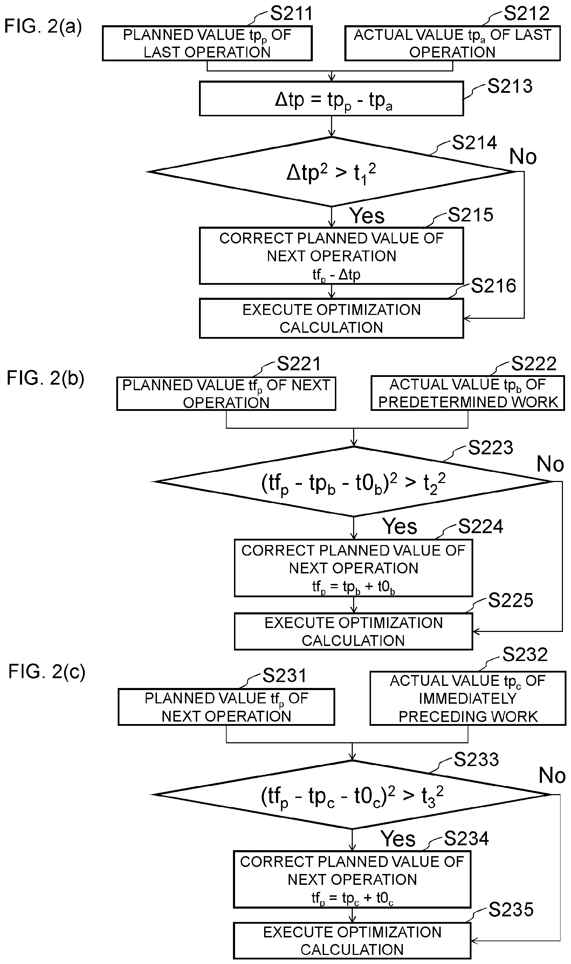

Examples of methods of correcting the operation plan performed in the operation plan correction unit 17 are shown in the flowcharts of FIG. 2. FIG. 2 (a) is a flowchart of correcting the future operation plan using a difference between a planned operation value and an actual operation value relating to the last operation. In this method, for example, a target planned operation value tfₚ is an operation start time, and a planned operation value tpₚ and an actual operation value tpₐ of the operation start time relating to the last operation are acquired from a process computer etc. of the factory (S211, S212). A difference Δtp between the acquired planned operation value tpₚ and actual operation value tpₐ is calculated (S213). Then, it is determined whether the squared value of the difference Δtp is larger than the squared value of an allowable value t₁ (S214). If the former is larger than the latter, the planned operation value tfₚ of the next operation is corrected and substituted by tfₚ - Δtp (S215), and the corrected planned operation value is output to the demand and supply prediction unit 14 for an optimization calculation (S216). When the squared value of the difference Δtp is equal to or smaller than the squared value of the allowable value ti, the planned operation value tfₚ of the next time is output to the demand and supply prediction unit 14 as is without being corrected. Here, it is preferable that the allowable value t₁ be approximately equal to a cycle time of the optimization calculation to be described later. This method can correct and predict the start time of the next operation at the operation start time of the immediately preceding operation, which has an advantage in that enough time is allowed for giving an operator an advance notice about demand and supply work.

FIG. 2 (b) is a flowchart of correcting a future operation plan using an actual value relating to work a predetermined time before the operation plan. For example, the target planned operation value tfₚ is an operation start time, and a time of completion of preparation work performed a predetermined time t0_{b} before the operation start time is acquired as an actual value tp_{b} (S221, S222). It is determined whether the squared value of a difference between the planned operation value tfₚ and the sum of the actual value of the predetermined work and the predetermined time tp_{b} + t0_{b} is larger than the squared value of an allowable value t₂ (S223). When the former is larger than the latter, the planned operation value tfₚ of the next operation is corrected and substituted by tp_{b} + t0_{b} (S224), and the corrected planned operation value is output to the demand and supply prediction unit 14 for the optimization calculation (S225). When the squared value of the difference is equal to or smaller than the squared value of the allowable value, the planned operation value tfₚ of the next time is output to the demand and supply prediction unit 14 as is without being corrected (S235). Here, it is preferable that the allowable value t₂ be approximately equal to the cycle time of the optimization calculation to be described later. By acquiring the time of the preparation work that leads to the operation start and precedes the operation start by a predetermined time, this method can predict the start time of the next operation with high accuracy.

FIG. 2 (c) is a flowchart of correcting a future operation plan using an actual value relating to work immediately before the operation plan. For example, the target planned operation value tfₚ is the operation start time, and immediately preceding work that is performed a predetermined time t0_{c} before the operation start time is acquired as an actual value tp_{c} (S231, S232). It is determined whether the squared value of a difference between the planned operation value tfₚ and the sum of the actual value of the immediately preceding work and the predetermined time tp_{c} + t0_{c} is larger than the squared value of an allowable value t₃ (S233). When the former is larger than the latter, the planned operation value tfₚ of the next operation is corrected and substituted by tp_{c} + t0_{c} (S234), and the corrected planned operation value is output to the demand and supply prediction unit 14 for the optimization calculation (S235). When the squared value of the difference is equal to or smaller than the squared value of the allowable value, the planned operation value tfₚ of the next time is output to the demand and supply prediction unit 14 as is without being corrected (S235). Here, it is preferable that t0_{c} be smaller than t0_{b}. Further, it is preferable that the allowable value t₃ be approximately equal to the cycle time of the optimization calculation to be described later. By acquiring the time of the immediately preceding work that leads to operation start, this method can predict the start time of the next operation with higher accuracy. However, the time allowed for prompting an operator to change the demand and supply work is short, which limits the demand and supply work that can be changed.

The model parameter collection unit 13 collects set values of the plant model shown in Table 1 and Table 2 described above and the cost model shown in Table 3 described above, and outputs the collected set values to the demand and supply prediction unit 14 and the model calculation unit 16.

Using the information output from the latest data collection unit 11, the model parameter collection unit 13, and the plant operation plan and record collection unit 12 via the operation plan correction unit 17, the demand and supply prediction unit 14 calculates demand and supply amounts of gas, steam, and electricity during an evaluation period, and outputs information about the calculated demand and supply amounts to the model calculation unit 16.

The plant facility specification collection unit 15 collects operation limit values of each plant in the iron mill that are used for the plant model shown in Table 1 and Table 2 described above, and outputs the collected values to the model calculation unit 16.

Using the information output from the model parameter collection unit 13, the demand and supply prediction unit 14, and the plant facility specification collection unit 15, the model calculation unit 16 executes the optimization calculation for optimizing the management of demand and supply amounts of gas, steam, and electricity in the iron mill so as to reduce the demand and supply operation cost of various type of energy by an optimization technique, such as a branch and bound method, and calculates an optimum solution, i.e., optimum demand and supply amounts. It is preferable that a solution that minimizes the demand and supply operation cost of the entire place of business be obtained.

Further, the optimization calculation unit 10 predicts times of reaching plant operation limits in the case where operation is performed haphazardly, for example, predicts a time when the gas holder level reaches an upper or lower limit. The optimization calculation unit 10 outputs the collected demand and supply records, the calculated optimum demand and supply amounts and times of reaching plant operation limits to assist the work of demand and supply operation in the iron mill. For example, these pieces of information are output to the display item selection unit 20 through the server data output unit 18 and the server data acquisition unit 19. Further, the optimization calculation unit 10 outputs the demand and supply records and the optimum demand and supply amounts to assist the work of demand and supply operation in the iron mill. For example, these pieces of information are output to the guidance unit 40 through the server data output unit 18 and the server data acquisition unit 19.

The server data output unit 18 outputs the demand and supply records, and the optimum demand and supply amounts and the times of reaching plant operation limits, collected and calculated by the optimization calculation unit 10 to the guidance terminal device 3, for example.

### <Guidance Terminal Device>

The server data acquisition unit 19 acquires the demand and supply records, and the optimum demand and supply amounts and the times of reaching plant operation limits, collected and calculated by the optimization calculation unit 10 from the optimization calculation server device 2, and then outputs the demand and supply records, the optimum demand and supply amounts, and the times of reaching plant operation limits to the display item selection unit 20, and outputs the demand and supply records and the optimum demand and supply amounts to the guidance unit 40.

In the display item selection unit 20, conditions for determining display items are set and registered beforehand, and display items are determined based on the registered determination conditions using the information output from the optimization calculation unit 10. From the obtained determination result, display items are selected based on an order of priority or output items set beforehand, and work conditions and times of reaching plant operation limits are output to the alarm output unit 30.

Specifically, the procedure of setting and registering the conditions for determining display items in the display item selection unit 20 can have the following steps:
In a group selection step (S 1), groups such as the types of gas, steam, and electricity shown in the above-described Table 2 are registered as message categories. For example, a C gas including city gas to be purchased is registered.
In an item selection step (S2), items used as determination items to be described later, such as records, optimum values, haphazard values, costs, and facility restrictions, of each group are selected from an item list. For example, an actual value and an optimum value of the amount of city gas purchased, and an actual value and an optimum value of a C gas holder level are selected.
In a determination item setting step (S3), determination items including a target time are registered. For example, a present actual amount of city gas purchased and an optimum value of the amount of city gas to be purchased five minutes later are selected as "city gas increase/decrease," and a present actual value of the C gas holder level and an optimum value of the C gas holder level five minutes later are selected as "C gas holder level increase/decrease."
In a determination condition formula setting step (S4), a determination condition formula is registered. For example, a case where the present actual value of the amount of city gas purchased is larger than the optimum value five minutes later by a predetermined amount or larger, or a case where the optimum value of the C gas holder level five minutes later is larger than the present actual value by a predetermined value or larger is registered as a determination formula named "C gas holder decrease 1."
In a determination result setting step (S5), a combination of a form of a message and the above-described determination condition formula to be output to the alarm output unit 30 is registered. For example, for the determination formula named "C gas holder decrease 1," "city gas decrease: XX km³/h" and "C gas holder decrease: YY km³" are combined.

The display item selection unit 20 selects display items in accordance with the preset order of priority from the result of the determination formula registered for each group, and outputs the selected display items to the alarm output unit 30. For example, a display item ranked highest in the order of priority is extracted from each of the groups, and the extracted display items are arranged in descending order of the order of priority among the groups. The order of priority may be based on an economic effect calculated by a unit price × an amount of change, machine learning, etc., for example. Further, the order of priority may be evaluated using the corrected value of the operation cost.

The alarm output unit 30 outputs the display items output from the display item selection unit 20, for example, work instructions and times of reaching plant operation limits that are arranged in the order of priority, to the guidance unit 40. These display items are displayed as an alarm, for example, in the form of a dialog window on the upper right side of a guidance screen, and an operator is notified by a ringing sound or the like.

The guidance unit 40 displays and outputs, on the guidance screen manipulated by the operator, the information output from the server data acquisition unit 19 and the information output from the alarm output unit 30 as a guidance output relating to demand and supply operation of gas, steam, and electricity in the iron mill. The operator determines required energy demand and supply operation based on the work instructions (optimum operation assistance message) and the times of reaching plant operation limits (other assistance messages) in the alarm display dialog screen displayed on the guidance screen. It is preferable that the energy demand and supply operation guidance device 1 learn whether the operator has adopted the work instructions output by the alarm output unit 30, whether the energy demand and supply operation has been changed based on the display of the times of reaching plant operation limits, etc. from changes in the actual values of the energy demand and supply amounts etc. and reflect on future ranking in the order of priority in the display item selection unit 20.

### [Other Embodiments]

In the case where an operation cost correction unit that corrects errors in demand and supply prediction is further included in, for example, the optimization calculation server device 2, the following configuration is preferable. First, the optimization calculation unit 10 adds an optimum demand and supply operation cost to an optimum solution. Then, the optimization calculation unit 10 calculates an actual value of the demand and supply operation cost of gas, steam, and electricity (an actual value of the operation cost) at the current time of day. Here, the actual value of the operation cost can be considered as a demand and supply operation cost one calculation cycle ahead in the case where the current haphazard operation is performed. A calculated optimum demand and supply operation cost and the actual value of the operation cost are output to the operation cost correction unit.

The operation cost correction unit is composed of an energy demand and supply prediction database (DB), a prediction error estimation unit, an operation cost rise amount calculation unit, and an addition unit.

The energy demand and supply prediction DB is formed by a non-volatile storage device, and stores data on predicted values and actual values of demand amounts and supply amounts of gas, steam, and electricity at points in the past. Here, the predicted values of the demand amounts and the supply amounts are demand amounts and supply amounts that are predicted one calculation cycle before a time of day at which data is stored in the energy demand and supply prediction DB.

The prediction error estimation unit acquires data on the predicted values and the actual values of the demand amounts and the supply amounts of gas, steam, and electricity within a specified period from the energy demand and supply prediction DB on a predetermined calculation cycle that is an action cycle of guidance. Using the acquired data, the prediction error estimation unit calculates prediction errors of the demand amounts and the supply amounts of gas, steam, and electricity (= predicted value - actual value) at each time of day within a period specified by a user in advance. Using the calculated prediction errors of the demand amounts and the supply amounts of gas, steam, and electricity, the prediction error estimation unit estimates prediction errors of future demand amounts and supply amounts of gas, steam, and electricity. Here, the predetermined calculation cycle that is the action cycle of guidance is a cycle time of the optimization calculation, and normally about five to ten minutes is preferable.

The prediction errors of the future demand amounts and supply amounts of gas, steam, and electricity can be each estimated by, for example, calculating a mean value or a weighted mean value of the prediction errors of the demand amounts and the supply amounts at the respective times of day within the specified period. The prediction errors of the future demand amounts and supply amounts of gas, steam, and electricity may be obtained for all of gas, steam, and electricity, or may be separately obtained for only one of gas, steam, and electricity on which a focus is put.

The prediction error estimation unit calculates differences between estimated values of the prediction errors of the future supply amounts of gas, steam, and electricity and estimated value of the prediction errors of the future demand amounts of gas, steam, and electricity as estimated values of prediction errors of the future demand and supply amounts of gas, steam, and electricity, and outputs the calculated values to the operation cost rise amount calculation unit.

The operation cost rise amount calculation unit calculates an amount of rise in the demand and supply operation cost of gas, steam, and electricity according to the estimated values of the prediction errors of the future demand and supply amounts of gas, steam, and electricity output from the prediction error estimation unit. Specifically, when the prediction errors of the future demand and supply amounts of gas, steam, and electricity increase, the demand and supply operation cost of gas, steam, and electricity rises. Therefore, a relationship between the prediction errors of the demand and supply amounts and the amount of rise in the demand and supply operation cost is analyzed and made into a function in advance, and estimated values of prediction errors of the demand and supply amounts output from the prediction error estimation unit can be input into this function to obtain the amount of rise in the demand and supply operation cost. The operation cost rise amount calculation unit outputs the calculated amount of rise in the demand and supply operation cost to the addition unit.

The addition unit calculates, as a corrected value of the operation cost, a value obtained by adding the amount of rise in the operation cost output from the operation cost rise amount calculation unit to the optimum demand and supply operation cost output from the optimization calculation unit. Then, the addition unit outputs information relating to the optimum demand and supply operation cost, the corrected value of the operation cost, and the actual value of the operation cost to the display item selection unit 20.

The display item selection unit 20 determines work conditions, with the information output from the operation cost correction unit further added to the determination conditions, and outputs the determined work conditions to the alarm output unit 30.

While an iron mill has been described above as an example of the place of business, the present invention is not limited thereto. When managing energy demand and supply in a place of business having a factory that performs intermittent operation, the amounts of demand and supply can be adjusted so as to reduce the operation cost of the entire place of business. Further, while the energy demand and supply operation guidance device 1 is composed of the optimization calculation server device 2 and the guidance terminal device 3 in the above-described example, the energy demand and supply operation guidance device 1 may instead be a single information processing device, or the functions may be divided and installed in separate information processing devices.

The embodiments of the present invention having been described above can be realized as a computer executes a program. A computer-readable recording medium in which this program is recorded, and a computer program product such as this program can also be applied as embodiments of the present invention. Examples of recording media that can be used include a flexible disc, a hard disc, an optical disc, a magnetooptical disc, a CD-ROM, a magnetic tape, a non-volatile memory card, and an ROM.

A program for the optimization calculation server device is configured such that the functions of the optimization calculation unit 10 and the server data output unit 18 of the optimization calculation server device 2 are executed by a computer. Further, it is preferable that this program be configured such that the function of the operation cost correction unit is executed by a computer.

A program for the guidance terminal device is configured such that the functions of the server data acquisition unit 19, the display item selection unit 20, the alarm output unit 30, and the guidance unit 40 of the guidance terminal device 3 are executed by a computer.

An energy demand and supply operation program may be configured to automatically perform the work of demand and supply operation of gas, steam, and electricity in a place of business, in addition to the program for the optimization calculation server device and the program for the guidance terminal device. The program may be configured such that an operator can manually intervene while the work of demand and supply operation is automatically performed. It is preferable that conditions for manual intervention be stored and subjected to machine learning so as to be reflected on the optimization calculation.

### (Example 1)

Using the energy demand and supply operation guidance device 1 shown in FIG. 1, the present invention was applied to demand and supply operation of an LD gas in the case where blowing was simultaneously performed in a plurality of converters at a steel mill. In this example, in particular, the process of predicting an operation plan was conducted using the optimization calculation server device 2. The steel mill performs operation in which blowing is intermittently performed in three converters, converters No. 1, 2, and 3.

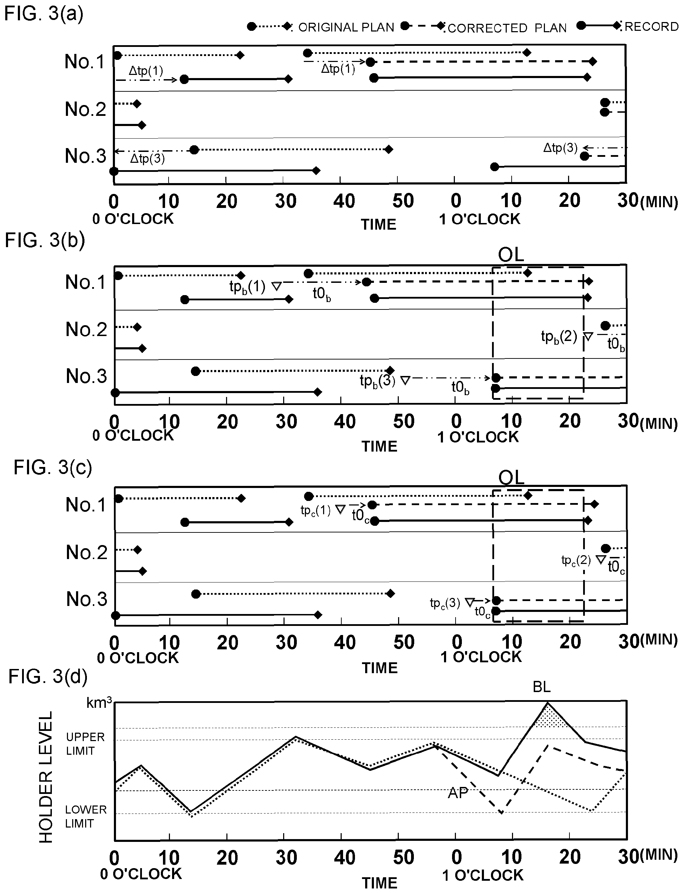

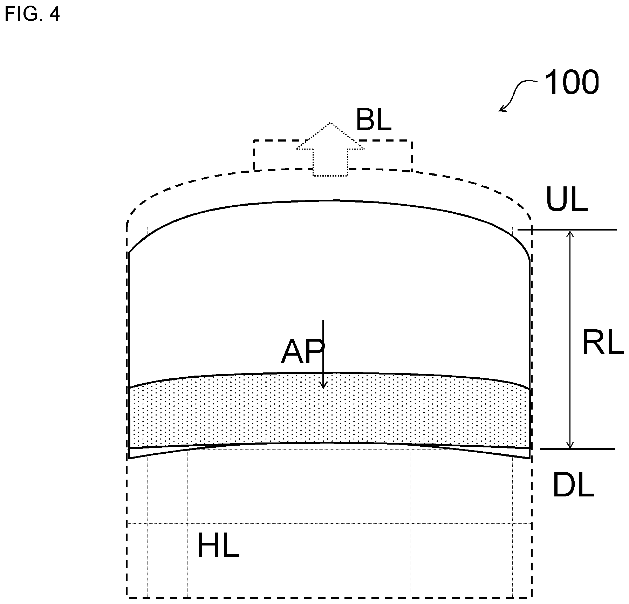

FIG. 3 shows examples of methods of correcting an operation plan with blowing in the converters selected as the operation plan. FIGs. 3 (a) to (c) show examples of correcting blowing patterns in the respective converters in accordance with the methods of correcting the operation plan shown in FIGs. 2 (a) to 2(c). FIG. 3 (d) represents fluctuations in a gas holder level of a recovered LD gas according to blowing in the converters. FIG. 4 shows, in a sectional view, an operation concept of the LD gas holder.

The amount of LD gas generated varies depending on the form of blowing in the converter, the amount of molten steel, overlapping of blowing times in a plurality of converters, etc., and the LD gas holder level increases and decreases accordingly. As shown in FIG. 4, when an operation upper limit (UL) of the LD gas holder level is exceeded, the surplus LD gas has to be released (BL), which incurs a loss. It is preferable that the LD gas holder level remain within an applicable range (RL) between the operation upper limit (UL) and an operation lower limit (DL).

As shown in FIGS. 3 (a) to (c), there is a wide gap between a blowing start time (black circle) in an original operation plan (dotted line) and a blowing start time (black circle) in an operation record (solid line), and thus the demand and supply of energy are not well predicted. For example, from before about 1: 10, the state of simultaneous blowing (OL) in the converter No. 1 and the converter No. 3 failed to be predicted, which resulted in a wide gap between the prediction (dotted line) and the record (solid line) of the LD gas holder level in FIG. 3 (d). From after 1:10 to around 1:20, the LD gas generated exceeded the operation upper limit (UL) of the gas holder, so that the gas had to be released (BL).

FIG. 3 (a) shows a result of correcting the operation plan of each converter by the method shown in FIG. 2 (a). This method uses a difference between a planned operation value and an actual operation value relating to the last operation. In the converter No. 1, the corrected operation plan and the operation record matched well. In the converter No. 2, no correction was made as the difference between the operation plan and the operation record relating to the last operation was within an allowable value. On the other hand, in the converter No. 3, the predicted time was later than the actual time.

FIG. 3 (b) shows a result of correction using a molten pig iron arrival time (tp_{b}) as blowing preparation work. The molten pig iron arrival time was set to t0_{b} = 15 minutes before the start of blowing. As a result of this correction, the operation plans and the operation records of blowing in the converters No. 1 to 3 matched well, and the state of simultaneous blowing (OL) in the converter No. 1 and the converter No. 3 before 1: 10 was successfully predicted.

FIG. 3 (c) shows a result of correction using a signal (tp_{c}) for closing a fire shutter of the converter as blowing preparation work. The signal for closing the fire shutter of the converter was set to t0_{b} = five minutes before the start of blowing. As a result of this correction, the operation plans and the operation records of blowing in the converters No. 1 to 3 matched well, and the state of simultaneous blowing (OL) in the converter No. 1 and the converter No. 3 before 1: 10 was successfully predicted.

FIG. 3 (d) shows, by the dashed line, a case where the plant operation plan and record collection unit 12 predicted fluctuations in the amount of LD gas generated with high accuracy using the operation plan corrected in FIG. 3 (b). In this case, a time at which the LD gas holder level would reach the operation upper limit (UL) when haphazard operation was performed, and an optimum LD gas holder level a predetermined time later were displayed in the alarm display dialog of the guidance screen, and an operator performed advance payout (AP) of an LD gas. Performing advance payout of the LD gas from ten minutes before the start of simultaneous blowing (OL) in the converters could prevent release of the LD gas (BL). On the other hand, purchasing a gas or adjusting the demand before the LD gas holder level falls below the operation lower limit (DL) can avoid holder landing (HL) etc.

### (Example 2)

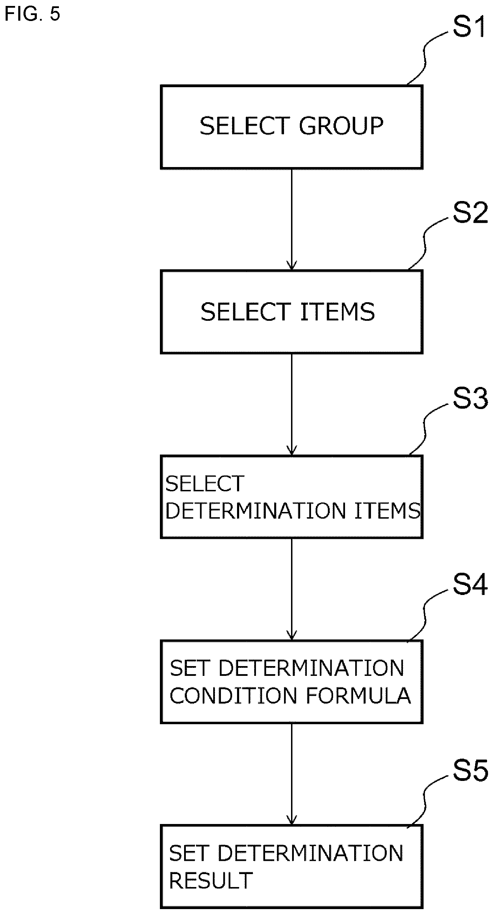

Data output from the optimization calculation server device 2 under the conditions of Example 1 were instructed to an operator as work conditions by the guidance terminal device 3. Specifically, in the display item selection unit 20 of the guidance terminal device 3, conditions for determining display items were set and registered in accordance with the flow of FIG. 5. Using information output from the optimization calculation unit 10, display items were determined based on the registered determination conditions. From the obtained determination result, display items were selected based on the order of priority and output items set beforehand, and work conditions and times of reaching plant operation limits were output to the alarm output unit 30.

In the group selection step (S1), groups such as the types of gas, steam, and electricity shown in the above-described Table 2 are registered as message categories. For example, an LD gas generated in a steel mill is registered.

In the item selection step (S2), items used as determination items to be described later, such as records, optimum values, haphazard values, costs, and facility restrictions, of each group are selected from an item list. For example, an operation plan of the steel mill, an actual value and an optimum value of the amount of LD gas generated, and an actual value and an optimum value of the LD gas holder level are selected.

In the determination item setting step (S3), determination items including a target time are registered. For example, a present actual payout amount of LD gas and an optimum value of the payout amount of LD gas five minutes later are selected as "LD gas payout increase/decrease," and a present actual value of the LD gas holder level and an optimum value of the LD gas holder level five minutes later are selected as "LD gas holder level increase/decrease."

In the determination condition formula setting step (S4), a determination condition formula is registered. For example, a case where the present actual value of the payout amount of LD gas is smaller than the optimum value five minutes later by a predetermined amount or larger, or a case where the optimum value of the LD gas holder level five minutes later is smaller than the present actual value by a predetermined value or larger is registered as a determination formula named "LD gas holder increase 1."

In the determination result setting step (S5), a combination of a form of a message and the above-described determination condition formula to be output to the alarm display unit is registered. For example, for the determination formula named "LD gas holder increase 1," "LD gas payout increase: XX km³/h" and "LD gas holder increase: YY km³" are combined.

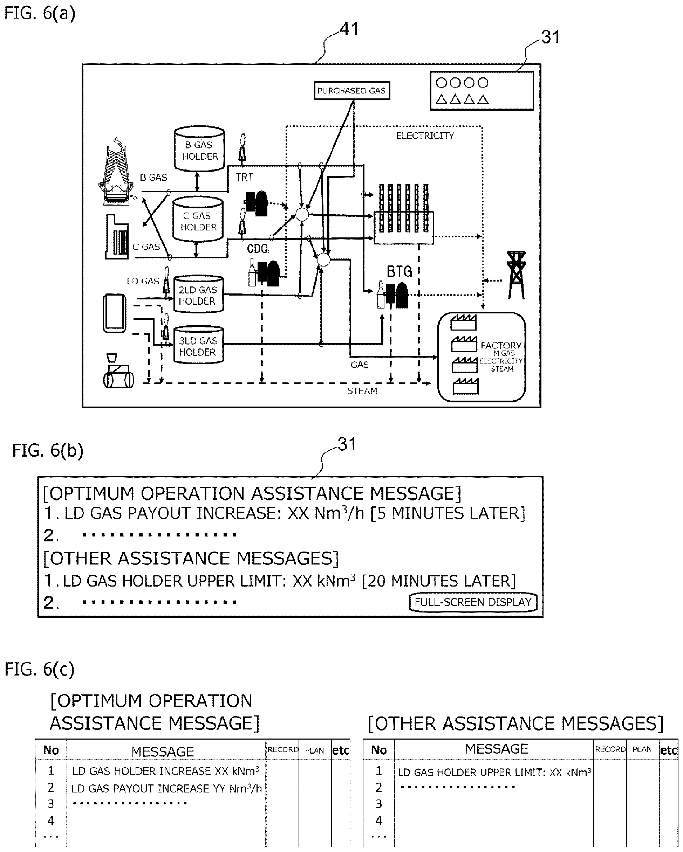

Prediction data based on the method of FIG. 3 (b) was acquired from the operation plan of the steel mill shown in Example 1, and display items were selected in accordance with the preset order of priority and output to the alarm output unit 30. The alarm output unit 30 output, to the guidance unit 40, the display items output from the display item selection unit 20, for example, the work instructions and the times of reaching plant operation limits that were arranged in the order of priority. Required energy demand and supply operation was determined from the work instructions (optimum operation assistant message) and the times of reaching plant operation limits (other assistance messages) in an alarm display dialog screen 31 (FIG. 6 (b)) displayed on a guidance screen 41 as shown in FIG. 6 (a). In the examples of FIGS. 6 (b) and (c), the operation plan of the steel mill was corrected to thereby give a warning that the upper limit of the LD gas holder would be reached 20 minutes later and give instructions that the payout amount of the LD gas should be increased.

While the example of application in a factory that supplies an LD gas has been shown in the above examples, the present invention can be applied to any factories that demand energy, such as rolling mills, if the factories operate intermittently, and can help reduce the purchase of gas and electricity.

### Industrial Applicability

The present invention is suitably applied to general energy demand and supply operation in a place of business having a factory in which energy utilities, such as gas, steam, and electricity, fluctuate in accordance with the plant operation.

### Reference Signs List

- 1: Energy demand and supply operation guidance device
- 2: Optimization calculation server device
- 3: Guidance terminal device
- 10: Optimization calculation unit
- 11: Latest data collection unit
- 12: Plant operation plan and record collection unit
- 13: Model parameter collection unit
- 14: Demand and supply prediction unit
- 15: Plant facility specification collection unit
- 16: Model calculation unit
- 17: Operation plan correction unit
- 18: Server data output unit
- 19: Server data acquisition unit
- 20: Display item selection unit
- 30: Alarm output unit
- 31: Alarm display dialog screen
- 40: Guidance unit
- 41: Guidance screen
- 100: LD gas holder
- OL: Overlapping operation (simultaneous blowing)
- UL: Operation upper limit
- DL: Operation lower limit
- BL: Gas release
- AP: Advance payout
- HL: Holder landing
- RL: Applicable range

## Claims

1. An energy demand and supply operation guidance device that assists work of demand and supply operation of gas, steam, and electricity in a place of business having a factory that performs intermittent operation,
**characterized in that**:
the device comprises:
an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model;
a display item selection unit that selects at least one of work conditions to be changed in the future determined based on future optimum demand and supply amounts calculated by the optimization calculation unit and on present actual demand and supply amounts, and selects at least one selected from the times of reaching plant operation limits predicted by the optimization calculation unit; and
an alarm output unit that functions to output display items selected by the display item selection unit; and
a future operation plan of the factory used in the optimization calculation unit is corrected based on one or two selected from a last operation record and last operation information in the factory, where
the optimum demand and supply amounts here are demand and supply amounts that reduce a demand and supply operation cost of the place of business.

2. The energy demand and supply operation guidance device according to claim 1,
wherein
the operation plan to be corrected is an operation start time, and one, or a combination of two or more, selected from the following is used:
A: correction using a time difference between a plan and a record of an operation start time in the last operation of the factory;
B: correction using operation information on the factory that is acquirable a predetermined time before operation start of the factory; and
C: correction using operation information on the factory that is acquirable immediately before operation start of the factory.

3. An energy demand and supply operation guidance system that includes an optimization calculation server device and a guidance terminal device and assists work of demand and supply operation of gas, steam, and electricity in a place of business having a factory that performs intermittent operation, **characterized in that**:
the optimization calculation server device has:
an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model; and
a server data output unit that outputs, as server data, actual demand and supply amounts of gas, steam, and electricity in the place of business, and the optimum demand and supply amounts and the times of reaching operation limits that have been predicted by the optimization calculation unit;
the guidance terminal device has:
a server data acquisition unit that acquires the server data from the server data output unit;
a display item selection unit that selects at least one of work conditions to be changed in the future determined based on future optimum demand and supply amounts and present actual demand and supply amounts that have been acquired, and selects at least one selected from the times of reaching plant operation limits predicted by the optimization calculation unit; and
an alarm output unit that functions to output display items selected by the display item selection unit; and
a future operation plan of the factory used in the optimization calculation unit is corrected based on one or two selected from a last operation record and last operation information in the factory,
the optimum demand and supply amounts here being demand and supply amounts that reduce a demand and supply operation cost of the place of business.

4. The energy demand and supply operation guidance system according to claim 3, wherein the operation plan to be corrected is an operation start time, and one, or a combination of two or more, selected from the following is used:
A: correction using a time difference between a plan and a record of an operation start time in the last operation of the factory;
B: correction using operation information on the factory that is acquirable a predetermined time before operation start of the factory; and
C: correction using operation information on the factory that is acquirable immediately before operation start of the factory.

5. An optimization calculation server device that is used to assist work of demand and supply operation of gas, steam, and electricity in a place of business having a factory that performs intermittent operation, **characterized in that**:
the device comprises:
an optimization calculation unit that, using a plant model that describes demand-supply balances of gas, steam, and electricity in the place of business including an amount of electricity supplied from an electricity company and an amount of gas supplied from a gas company, and a cost model that describes a demand and supply operation cost of the place of business, predicts optimum demand and supply amounts of gas, steam, and electricity in the place of business and times of reaching plant operation limits, based on collected latest values of variables included in the plant model and on model parameters including set values of the plant model and the cost model; and
a server data output unit that outputs actual demand and supply amounts of gas, steam, and electricity in the place of business, and the optimum demand and supply amounts and the times of reaching operation limits that have been predicted by the optimization calculation unit, to assist the work of demand and supply operation; and
a future operation plan of the factory used in the optimization calculation unit is corrected based on one or two selected from a last operation record and last operation information in the factory,
the optimum demand and supply amounts here being demand and supply amounts that reduce a demand and supply operation cost of the place of business.

6. The optimization calculation server device according to claim 5,
wherein the operation plan to be corrected is an operation start time, and one, or
a combination of two or more, selected from the following is used:
A: correction using a time difference between a plan and a record of an operation start time in the last operation of the factory;
B: correction using operation information on the factory that is acquirable a predetermined time before operation start of the factory; and
C: correction using operation information on the factory that is acquirable immediately before operation start of the factory.

7. A guidance terminal device that assists work of demand and supply operation of gas, steam, and electricity in a place of business having a factory that performs intermittent operation, **characterized in that**:
the device comprises:
a server data acquisition unit that acquires, from a server, actual demand and supply amounts of gas, steam, and electricity in the place of business, and optimum demand and supply amounts of gas, steam, and electricity in the place of business and times of reaching plant operation limits that the server has predicted using a plant model that describes demand-supply balances of gas, steam, and electricity in the place of business including an amount of electricity supplied from an electricity company and an amount of gas supplied from a gas company, and a cost model that describes a demand and supply operation cost of the place of business, based on collected latest values of variables included in the plant model and on model parameters including set values of the plant model and the cost model;
a display item selection unit that selects at least one of work conditions to be changed in the future determined based on future optimum demand and supply amounts and present actual demand and supply amounts that have been acquired, and selects at least one selected from the times of reaching plant operation limits predicted by the server; and
an alarm output unit that functions to output display items selected by the display item selection unit; and
one or both of the work condition and the time of reaching an operation limit that have been selected by the display item selection unit are predicted by correcting a future operation plan of the factory based on one or two selected from a last operation record and last operation information in the factory,
the optimum demand and supply amounts here being demand and supply amounts that reduce a demand and supply operation cost of the place of business.

8. The guidance terminal device according to claim 7, wherein the operation plan to be corrected is an operation start time, and one, or a combination of two or more, selected from the following is used:
A: correction using a time difference between a plan and a record of an operation start time in the last operation of the factory;
B: correction using operation information on the factory that is acquirable a predetermined time before operation start of the factory; and
C: correction using operation information on the factory that is acquirable immediately before operation start of the factory.

9. An energy demand and supply operation method in a place of business, **characterized in that** the method includes a step of, after correcting an operation plan of the factory using the energy demand and supply operation guidance device according to claim 1 or 2, performing work of demand and supply operation of gas, steam, and electricity in the place of business in accordance with information output from the energy demand and supply operation guidance device.

10. A program for an optimization calculation server device that is a program used by the optimization calculation server device according to claim 5 or 6, **characterized in that** the program is configured such that functions of the optimization calculation unit and the server data output unit are executed by a computer.

11. A program for a guidance terminal device that is a program used by the guidance terminal device according to claim 7 or 8, **characterized in that** the program is configured such that functions of the respective units of the guidance terminal device are executed by a computer.

12. An energy demand and supply operation program, **characterized in that** the program is configured such that the step of the energy demand and supply operation method in a place of business according to claim 9 is executed by a computer.
